# EUROPÄISCHE PATENTSCHRIFT

(11) **EP 3 224 162 B1**
(45) Veröffentlichungstag und Bekanntmachung des Hinweises auf die Patenterteilung: **24.03.2021**
(21) Anmeldenummer: 15775149.6
(22) Anmeldetag: 29.09.2015
(51) Int. Cl.: B65G 15/40, B65G 15/42

(54) **FÖRDERGURT MIT QUERSTEIFEN- UND CHEVRON-PROFILIERUNGSBEREICHE**
TRANSPORT BELT WITH TRANSVERSE AND CHEVRON-SHAPED RIDGES
BANDE DE TRANSPORT COMPORTANT DES PROTRUSIONS TRANSVERSALES ET EN FORME DE CHEVRONS

(30) Priorität: 27.11.2014 DE 102014224291
(43) Veröffentlichungstag der Anmeldung: 04.10.2017
(73) Patentinhaber: ContiTech Transportbandsysteme GmbH, 30165 Hannover (DE)
(72) Erfinder: MINKIN, Andrey, 37083 Göttingen (DE)
(74) Vertreter: Continental Corporation
(86) Internationale Anmeldenummer: PCT/EP2015/072322
(87) Internationale Veröffentlichungsnummer: WO 2016/082991

(56) Entgegenhaltungen:
- WO-A1-2014/180585
- JP-U- S4 848 385
- JP-U- S5 883 314
- JP-U- S6 274 608
- JP-U- S6 274 609

## Beschreibung

Die Erfindung betrifft einen Fördergurt, insbesondere einen Rohrfördergurt bzw. Schlauchfördergurt oder Taschenfördergurt, welcher einen Gurtkörper aufweist, der eine tragseitige Deckplatte aufweist, wobei auf der tragseitigen Deckplatte eine im Wesentlichen senkrecht zur Oberfläche der tragseitigen Deckplatte ausgebildete Profilierung ausgebildet ist, wobei die Profilierung entlang einer Längsrichtung der tragseitigen Deckplatte mehrere Querstreifen-Profilierungsbereiche aufweist.

In der Fördertechnik von losen Fördergütern, wie Schüttgütern, beispielsweise Gestein, Bodenschätze, Abraummaterial, landwirtschaftliche Produkte etc., werden üblicherweise muldenförmig ausgebildete Fördergurte eingesetzt, die das Fördergut an einer Aufnahmestelle auf ihrer tragseitigen Deckplatte aufnehmen und an einer Abgabestelle wieder abgeben. Da das Fördergut während des Transportes auf dem muldenförmig ausgebildeten Fördergurt gegenüber der Umgebung üblicherweise nicht abgedeckt ist, können Verunreinigungen und Witterungseinflüsse der Umgebung auf das Fördergut einwirken und auch das Fördergut kann in Abhängigkeit der Art des zu transportierenden Fördergurtes die Umgebung belasten oder sogar gefährden. Auch können mit muldenförmig ausgebildeten Fördergurten aufgrund ihrer Konstruktion Kurven und Steigungen nur in einem eingeschränkten Maße realisiert werden. So kann in der Regel bei herkömmlichen Fördergurtanlagen ein Neigungswinkel von 20° Steigung nicht überschritten werden. Wird hier die Grenze der Machbarkeit erreicht, müssen mehrere, unter anderem spezielle Fördergurte, mit Übergabenstellen verbunden werden. Dies erhöht den Aufwand und damit die Kosten der Fördergurtanlage deutlich.

Um dies zu vermeiden, wurden geschlossen betriebene Fördergurte, wie beispielsweise Rohrfördergurte oder Taschenfördergurte, entwickelt. Rohrfördergurte werden zwischen einer Aufnahme- und Abgabestelle zu einem geschlossenen Rohr bzw. Schlauch zusammengerollt, indem sich die äußeren entlang der Längsseitenkanten des Fördergurtes ausgebildeten Randzonen, auch Gurtflanken genannt, überlappen und damit das Fördergut beim Transport vollständig einschließen können. Hierdurch ist es möglich, das Fördergut im Rohrfördergurt vollständig von der Umgebung zu trennen, da der Rohrfördergurt über die Förderstrecke verschlossen bleibt. Im Bereich der Aufnahme- und Abgabestelle des Fördergutes sind die Randzonen des Fördergurtes nicht mehr überlappend angeordnet, sondern der Rohrfördergurt weist die Form eines konventionellen gemuldeten Fördergurtes auf. Folglich können bei einem derartigen Rohrfördergurt Verunreinigungen in dem Fördergut entlang der Förderstrecke und damit verbundene Umweltbelastungen weitestgehend vermieden werden. Weitere wesentliche Vorteile der Rohrfördergurte gegenüber den herkömmlichen gemuldeten Fördergurten liegen in der Realisierungsmöglichkeit von sehr engen dreidimensionalen Kurven und in dem Erreichen von relativ hohen Neigungswinkeln von bis zu 35° Steigung, wodurch die Umsetzung von komplizierten dreidimensionalen kurvigen Linienführungen mit einer einzigen Fördergurtanlage möglich ist.

Ein Taschenfördergurt weist zwei gewebeverstärkte Profile mit je einem einvulkanisierten Stahlseil als Zugträger auf. Die Profile laufen über Rollensätze und tragen eine das Fördergut aufnehmende Tasche, welche durch den Gurtkörper des Fördergurtes ausgebildet ist. Die tropfenförmig geformte Tasche bzw. der tropfenförmig geformte Gurtkörper ist aus einem hochflexiblen Gummi ausgebildet und ist mittels Heißvulkanisation mit den Profilen verbunden. Die Profile sind während des Transportes des Fördergurtes übereinander angeordnet, so dass der Fördergurt staubdicht abgeschlossen ist. Ähnlich wie bei Rohrfördergurten liegen die wesentlichen Vorteile der Taschenfördergurte gegenüber den herkömmlich gemuldeten Fördergurten in der Realisierungsmöglichkeit von sehr engen dreidimensionalen Kurven und in den relativ hohen Neigungswinkeln von bis zu 35° Steigung.

Um den Neigungswinkel derartiger Fördergurte, insbesondere von Rohrfördergurten und/oder Taschenfördergurten, weiter zu erhöhen, ist es bekannt, auf einer tragseitigen Deckplatte des Gurtkörpers, auf welcher das Fördergut bei einem Transport aufliegt, mit einer Profilierung zu versehen, wobei dafür insbesondere Querstreifen-Profilierungen geeignet sind, welche quer zur Längsrichtung bzw. quer zur Förderrichtung des Fördergurtes auf der tragseitigen Deckplatte angeordnet sind. Durch die Anordnung von derartigen Querstreifen-Profilierungen können Neigungswinkel des Fördergurtes von bis zu 60° Steigung erreicht werden. Eine derartige Querstreifen-Profilierung ist beispielsweise aus der WO 2005/085101 A1 sowie aus der JP S58 083 314 U bekannt JP S58 083 314 U offenbart einen Fördergurt nach dem Oberbegriff des Anspruchs 1.

Die Anordnung von Querstreifen-Profilierungen auf einer tragseitigen Deckplatte ist jedoch sehr aufwändig und teuer. So müssen die die Querstreifen-Profilierungen ausbildenden Stegelemente aufgrund ihrer Größe, insbesondere in radialer Richtung des Rohr- oder Taschenfördergurtes, als separate Elemente hergestellt und zum Beispiel mittels Aufkleben, das heißt durch Kaltvulkanisation, nachträglich auf dem Gurtkörper des Fördergurtes aufgebracht werden. Dies erfordert die separate Herstellung der Stegelemente sowie deren nachträgliche Montage auf dem Fördergurt als weiteren Arbeitsschritt. Eine einstückige Ausbildung der Stegelemente mit dem Gurtkörper ist fertigungstechnisch aufgrund der Größe der Stegelemente nicht möglich. So kann es erforderlich sein, die Stegelemente erst am Einsatzort des Fördergurtes auf dem Gurtkörper zu montieren, um das Volumen des Fördergurtes für den Transport nicht zu vergrößern.

Der Erfindung liegt daher die Aufgabe zugrunde, einen Fördergurt zur Verfügung zu stellen, mittels welchem ein Neigungswinkel von bis zu 60° Steigung realisiert werden kann und gleichzeitig der Herstellungsaufwand, die Herstellungszeit und die Herstellungskosten des Fördergurtes reduziert werden können.

Die Aufgabe wird erfindungsgemäß mit einem Fördergurt gemäß Anspruch 1 gelöst. Vorteilhafte Weiterbildungen der Erfindung sind in den Unteransprüchen beschrieben.

Der Fördergurt gemäß der Erfindung zeichnet sich dadurch aus, dass die Profilierung des Fördergurtes zusätzlich zu den Querstreifen-Profilierungsbereichen entlang der Längsrichtung der tragseiteigen Deckplatte mehrere Chevron-Profilierungsbereiche aufweist.

Durch die Querstreifen-Profilierungsbereiche ist die Ausbildung eines formschlüssigen Transportes des Fördergutes auf der tragseitigen Deckplatte des Fördergutes möglich, wobei ein Neigungswinkel des Fördergurtes von bis zu 60° Steigung erreicht werden kann. Dadurch, dass nunmehr zusätzlich zu den Querstreifen-Profilierungsbereichen Chevron-Profilierungsbereiche auf der tragseitigen Deckplatte des Gurtkörpers ausgebildet sind, ist zusätzlich zu dem formschlüssigen Transport des Fördergutes ein kraftschlüssiger Transport des Fördergutes möglich. Durch die Chevron-Profilierungsbereiche kann der Wandreibungswert zwischen dem Fördergut und dem Fördergurt erhöht werden, wodurch zusammen mit dem inneren Reibwert des Fördergutes ein kraftschlüssiger Transport des Fördergutes erreicht werden kann. Sind die Chevron-Profilierungsbereiche zwischen Querstreifen-Profilierungsbereichen angeordnet, so ist eine Kraftübertragung von dem Fördergurt auf das Fördergut zwischen den Querstreifen-Profilierungsbereichen möglich, wodurch ein Verrutschen des Fördergutes entgegen der Förderrichtung auf der tragseitigen Deckplatte des Gurtkörpers des Fördergurtes verhindert werden kann. Durch die zusätzliche Kraftübertragung auf das Fördergut mittels der Chevron-Profilierungsbereiche ist es möglich, den Abstand in Längsrichtung der tragseitigen Deckplatte zwischen den Querstreifen-Profilierungsbereichen auf der tragseitigen Deckplatte des Gurtkörpers größer als sonst üblich auszubilden, da nunmehr zusätzlich zu dem formschlüssigen Transport des Fördergutes auch ein kraftschlüssiger Transport des Fördergutes durch die Chevron-Profilierungsbereiche zwischen den Querstreifen-Profilierungsbereichen möglich ist. Trotz eines größeren Abstandes der Querstreifen-Profilierungsbereiche zueinander kann dadurch ein Zurückrutschen des Fördergutes beim Transport und insbesondere bei Neigungswinkeln des Fördergurtes von bis zu 60° Steigung sicher verhindert werden. Durch die mögliche Vergrößerung des Abstandes der Querstreifen-Profilierungsbereiche entlang der Längsrichtung des Gurtkörpers bzw. der tragseitigen Deckplatte des Gurtkörpers kann die Anzahl der auf der tragseitigen Deckplatte anzuordnenden Querstreifen-Profilierungsbereiche reduziert werden, wodurch die Herstellungskosten, der Herstellungsaufwand und auch die Herstellungszeit der Anordnung der Querstreifen-Profilierungsbereiche auf der tragseitigen Deckplatte des Gurtkörpers des Fördergurtes reduziert werden, wodurch die gesamte Herstellung des Fördergurtes vereinfacht werden kann und kostenreduzierter erfolgen kann. Durch die Ausbildung dieser zwei verschiedenen Arten von Profilierungen auf einem Gurtkörper können sowohl der Transport des Fördergutes auf dem Fördergurt verbessert werden, als auch der Aufwand, die Zeit und die Kosten in der Herstellung des Fördergurtes reduziert werden.

Erfindungsgemäß sind die Chevron-Profilierungsbereiche und die Querstreifen-Profilierungsbereiche in Längsrichtung der tragseitigen Deckplatte alternierend angeordnet. Bei einer alternierenden Anordnung folgt einem Chevron-Profilierungsbereich ein Querstreifen-Profilierungsbereich und einem Querstreifen-Profilierungsbereich wieder ein Chevron-Profilierungsbereich und so weiter. Durch die abwechselnde Anordnung von Chevron-Profilierungsbereichen und Querstreifen-Profilierungsbereichen ist eine besonders gute Verteilung entlang der Längsrichtung der tragseitigen Deckplatte eines formschlüssigen und eines kraftschlüssigen Transportes des Fördergutes möglich, um den Transport des Fördergutes auch bei einem größeren Abstand der Querstreifen-Profilierungsbereiche zueinander sicher und wirtschaftlich, insbesondere bei Neigungswinkeln des Fördergurtes von bis zu 60°, ausführen zu können.

Durch die Anordnung von Chevron-Profilierungsbereichen zwischen Querstreifen-Profilierungsbereichen ist es möglich den Abstand zwischen den einzelnen Querstreifen-Profilierungsbereichen entlang der Längsrichtung der tragseitigen Deckplatte des Gurtkörpers zu erhöhen. Dabei kann es vorzugsweise vorgesehen sein, dass die Querstreifen-Profilierungsbereiche in einem Abstand L zwischen 1,5 m ≤ L ≤ 2,5 m, insbesondere von 1,8 m ≤ L ≤ 2,2 m, zueinander angeordnet sind. Der Abstand zwischen zwei Querstreifen-Profilierungsbereichen kann somit gegenüber herkömmlichen Fördergurten, welche ausschließlich Querstreifen-Profilierungsbereiche als Profilierung aufweisen, deutlich erhöht werden, wodurch die Herstellung der Fördergurte in Bezug auf Aufwand, Zeit und Kosten wesentlich gegenüber herkömmlichen Fördergurten mit ausschließlich Querstreifen-Profilierungsbereichen wesentlich verbessert werden kann.

Die Chevron-Profilierungsbereiche und/oder die Querstreifen-Profilierungsbereiche können sich jeweils über die Breite der tragseitigen Deckplatte von einer ersten, entlang einer ersten Längsseitenkante der tragseitigen Deckplatte ausgebildeten Randzone zu einer zweiten, entlang einer der ersten Längsseitenkante gegenüberliegenden zweiten Längsseitenkante der tragseitigen Deckplatte erstrecken. Durch die Erstreckung der Profilierungen, insbesondere der Chevron-Profilierungsbereiche und der Querstreifen-Profilierungsbereiche, über im Wesentlichen die gesamte Breite der tragseitigen Deckplatte kann eine möglichst große Menge an Fördergut über die Profilierung beim Transport auf dem Fördergurt in ihrer Position sicher gehalten werden. Sowohl eine formschlüssige als auch eine kraftschlüssige Übertragung zwischen Fördergurt und Fördergut ist somit über die gesamte Breite der tragseitigen Deckplatte und damit des Gurtkörpers, auf welchem das zu transportierende Fördergut aufliegt, möglich. Durch die Aussparung der Randzonen entlang der Längsseitenkanten der tragseitigen Deckplatte mit der Profilierung ist es möglich, dass bei der Ausbildung der Fördergurtes als Rohrfördergurt oder Taschenfördergurt eine Überlappung des Gurtkörpers im Bereich der Randzonen nicht durch Profilierungen behindert wird.

Mindestens eines der mehreren Querstreifen-Profilierungsbereiche kann beispielsweise ein Stegelement in einer Wellenkantenform aufweisen. Das Stegelement ist dann vorzugsweise in Form eines wellenförmig ausgebildeten Bandes geformt, welches sich über einen Teilbereich der Breite der tragseitigen Deckplatte oder über die gesamte Breite der tragseitigen Deckplatte bis hin zu den Randzonen erstrecken kann. Erstreckt sich das Stegelement in seiner Länge nur über einen Teilbereich der Breite, so können auch mehrere Stegelemente, vorzugsweise mehrere Stegelemente in einer Wellenkantenform, über die Breite der tragseitigen Deckplatte in einer Reihe beabstandet zueinander angeordnet sein. Durch die Wellenform des Stegelementes des Querstreifen-Profilierungsbereiches kann eine besonders stabile Trennwand auf der tragseitigen Deckplatte des Gurtkörpers ausgebildet werden. Die Wellen- bzw. Wellenkantenform erhöht die Stabilität des Querstreifen-Profilierungsbereiches, wodurch eine Verformung, beispielsweise ein Verknicken, der Querstreifen-Profilierungsbereiche durch das zu transportierende Fördergut verhindert werden kann. Ist das die Wellenkantform aufweisende Stegelement derart lang ausgebildet, dass es sich über die gesamte Breite der tragseitigen Deckplatte bis hin zu den Randzonen erstrecken kann, so kann das Stegelement und damit dieser Querstreifen-Profilierungsbereich in einem Stück auf der tragseitigen Deckplatte des Gurtkörpers angeordnet und befestigt werden, wodurch die Montagezeit und auch der Montageaufwand gegenüber Querstreifen-Profilierungsbereichen ausgebildet aus mehreren einzelnen Elementen, insbesondere einzelnen Stegelementen, die einzelnen befestigt werden müssen, wesentlich reduziert werden können. Zudem kann ein in einer Wellenkantenform ausgebildetes Stegelement bei einem Zusammenrollen des Gurtkörpers zu einem Rohrfördergurt bzw. Schlauchfördergurt auf einfache Art und Weise mit verformt werden, was bei andersartig ausgebildeten Stegelementen schwieriger ist.

Es ist aber auch möglich, dass mindestens eines der Querstreifen-Profilierungsbereiche jeweils mehrere in Querrichtung der tragseitigen Deckplatte in einer Reihe hintereinander angeordnete Stegelemente aufweist, welche derart beabstandet zueinander sind, dass bei einer rohrförmigen oder taschenförmigen Verformung des Fördergurtes die benachbart zueinander angeordneten Stegelemente zumindest bereichsweise aneinander anliegen oder sich überlappen. Sind die Querstreifen-Profilierungsbereiche aus in einer Reihe hintereinander angeordneten Stegelementen ausgebildet, so bilden die aneinander anliegenden bzw. sich überlappenden Stegelemente entlang ihrer Länge bzw. Längsausrichtung eine Trennwand über die Breite der tragseitigen Deckplatte bis hin zu den Randzonen aus. Die Stegelemente weisen vorzugsweise eine ebene, geradlinige Flächenerstreckung über ihre Länge auf.

Weiter ist es auch möglich, dass ein Querstreifen-Profilierungsbereich in Querrichtung der tragseitigen Deckplatte angeordnete Stegelemente mit einer ebenen, geradlinigen Flächenerstreckung in ihrer Länge als auch Stegelemente in einer Wellenkantenform aufweist.

Die Chevron-Profilierungsbereiche können bevorzugt jeweils mehrere diagonal zur Längsrichtung der tragseitigen Deckplatte angeordnete Stegelemente aufweisen, welche in Gruppen angeordnet sind, wobei jede Gruppe von Stegelementen eine V-Form mit einer aus zwei aneinander angrenzenden Stegelementen ausgebildete Spitze ausbildet, wobei die Spitze entgegen einer Förderrichtung des Fördergurtes ausgerichtet ist. In der V-Form der Gruppe der Stegelemente der Chevron-Profilierungsbereiche und insbesondere in der Spitze dieser V-Form kann sich das Fördergut abstützen, wobei eine Reibwirkung erreicht werden kann, wodurch das Fördergut auch bei größeren Steigungen und damit größeren Neigungswinkeln des Fördergurtes in ihrer Position sicher gehalten werden kann. Die die V-Form ausbildenden Stegelemente können beabstandet zueinander angeordnet sein oder benachbart zueinander angeordnete Stegelemente können unmittelbar aneinander angrenzen, um eine geschlossene V-Form auszubilden. Andere Anordnungen der Stegelemente, welche keine V-Form ausbilden, sind ebenfalls möglich. Ferner ist es auch möglich, dass alternativ oder zusätzlich zu den diagonal angeordneten Stegelementen die Chevron-Profilierungsbereiche Stegelemente, die sich in Längsrichtung und/oder Querrichtung der tragseitigen Deckplatte erstrecken, aufweisen.

Die Chevron-Profilierungsbereiche können jeweils in Querrichtung der tragseitigen Deckplatte zwei oder mehr Gruppen an V-förmig angeordneten Stegelementen aufweisen. Weist ein Chevron-Profilierungsbereich über die Breite des Gurtkörpers bzw. der tragseitigen Deckplatte des Gurtkörpers mehrere Gruppen von V-förmig angeordneten Stegelementen auf, so kann die Anzahl an V-förmig ausgebildeten Spitzen erhöht werden, wodurch die Abstützung des zu transportierenden Fördergutes auf der tragseitigen Deckplatte des Gurtkörpers verbessert werden kann. Die Gruppen eines Chevron-Profilierungsbereiches sind dabei in Querrichtung der tragseitigen Deckplatte hintereinander angeordnet. Durch die Anordnung von zwei oder mehreren Gruppen entlang der Querrichtung bzw. Breite des Gurtkörpers kann somit auch die erzielte Reibwirkung mittels der Chevron-Profilierungsbereiche zwischen dem Fördergurt und dem Fördergut verbessert und damit erhöht werden, um den Transport des Fördergutes verbessern zu können.

Um die V-förmige Spitze der Chevron-Profilierungsbereiche mit einer höheren Stabilität zu versehen, kann es bevorzugt vorgesehen sein, dass an der Spitze ein sich in Längsrichtung der tragseitigen Deckplatte erstreckendes Stegelement angeordnet ist, welches sich vorzugsweise entgegen der Förderrichtung des Fördergurtes von der Spitze weg erstreckt. Insbesondere, wenn das zu transportierende Fördergut in der Spitze der V-Form liegt und auf diese drückt, wirkt dadurch eine große Kraft auf die Spitze der V-Form, wodurch diese unerwünschterweise verformt werden kann, so dass keine ausreichende Abstützung des Fördergutes mehr sichergestellt werden könnte. Durch die Anordnung eines zusätzlichen Stegelementes in Längsrichtung der tragseitigen Deckplatte an der Spitze entgegen der Förderrichtung des Fördergurtes kann dies verhindert werden, da die Stabilität der Spitze der V-Form dadurch wesentlich erhöht werden kann.

Die Querstreifen-Profilierungsbereiche weisen vorzugsweise eine sich in senkrechter Richtung zur Oberfläche der tragseitigen Deckplatte erstreckende Höhe H_{Q} auf, welche bevorzugt größer ist als eine sich in senkrechter Richtung zur Oberfläche der tragseitigen Deckplatte erstreckende Höhe H_{C} der Chevron-Profilierungsbereiche. Durch die größere Höhe der Querstreifen-Profilierungsbereiche im Gegensatz zu den Chevron-Profilierungsbereichen werden die Chevron-Profilierungsbereiche von den Querstreifen-Profilierungsbereichen überragt, so dass die Querstreifen-Profilierungsbereiche jeweils eine Trennwand zwischen den einzelnen Chevron-Profilierungsbereichen ausbilden können.

Bevorzugt ist dabei ein Verhältnis der Höhe der Querstreifen-Profilierungsbereiche zu der Höhe der Chevron-Profilierungsbereiche von 3 ≤ H_{Q}/H_{C} ≤ 10 ausgebildet. Die Chevron-Profilierungsbereiche weisen vorzugsweise eine Höhe von 10 - 50 mm auf. Die Querstreifen-Profilierungsbereiche können vorzugsweise eine Höhe von bis zu 250 mm aufweisen.

Die Chevron-Profilierungsbereiche und insbesondere die einzelnen Elemente bzw. Stegelemente der Chevron-Profilierungsbereiche können eine relativ geringe Höhe aufweisen, so dass diese bei der Herstellung des Fördergutes und damit bei der Vulkanisation der tragseitigen Deckplatte des Gurtkörpers mit ausgebildet werden können. Die Chevron-Profilierungsbereiche können somit vorzugsweise einstückig mit der tragseitigen Deckplatte ausgebildet werden. Hierdurch ist es möglich, einen zusätzlichen Herstellungs- oder Montageschritt zur Anordnung und Befestigung der Chevron-Profilierungsbereiche bzw. der einzelnen Stegelemente der Chevron-Profilierungsbereiche auf der tragseitigen Deckplatte des Grundkörpers zu vermeiden. Hierdurch können die Herstellungszeit und auch die Herstellungskosten des gesamten Fördergurtes reduziert werden. Zudem ist durch die einstückige Ausbildung der Chevron-Profilierungsbereiche mit der tragseitigen Deckplatte eine besonders feste Verbindung zwischen den Chevron-Profilierungsbereichen bzw. den Stegelementen der Chevron-Profilierungsbereiche mit der tragseitigen Deckplatte des Gurtkörpers möglich.

Die Chevron-Profilierungsbereiche und insbesondere die einzelnen Elemente bzw. Stegelemente der Chevron-Profilierungsbereiche können aber auch nachträglich auf der tragseitigen Deckplatte des Gurtkörpers beispielsweise durch Aufvulkanisieren oder Aufkleben angeordnet werden.

Die Querstreifen-Profilierungsbereiche sind vorzugsweise an der tragseitigen Deckplatte durch Aufvulkanisieren befestigt. Die Querstreifen-Profilierungsbereiche bzw. die Stegelemente der Querstreifen-Profilierungsbereiche werden somit in einem zusätzlichen Herstellungsschritt oder Montageschritt auf der tragseitigen Deckplatte des Gurtkörpers befestigt. Alternativ zum Aufvulkanisieren können die Querstreifen-Profilierungsbereiche an der tragseitigen Deckplatte beispielsweise auch durch Aufkleben befestigt werden.

Nachfolgend wird die Erfindung unter Bezugnahme auf die anliegenden Zeichnungen anhand bevorzugter Ausführungsformen näher erläutert. Es zeigen:
- Fig. 1: eine schematische Schnittdarstellung eines Fördergurtes gemäß der Erfindung,
- Fig. 2: eine schematische Schnittdarstellung durch eine Tragrollenstation eines als Rohrfördergurt ausgebildeten Fördergurtes gemäß der Erfindung,
- Fig. 3: eine schematische perspektivische Schnittdarstellung eines als Rohrfördergurt ausgebildeten Fördergurtes gemäß der Erfindung,
- Fig. 4: eine weitere schematische perspektivische Schnittdarstellung eines als Rohrfördergurt ausgebildeten Fördergurtes gemäß der Erfindung, und
- Fig. 5: eine schematische Darstellung eines Schnittes durch einen als Taschenfördergurt ausgebildeten Fördergurt gemäß der Erfindung.

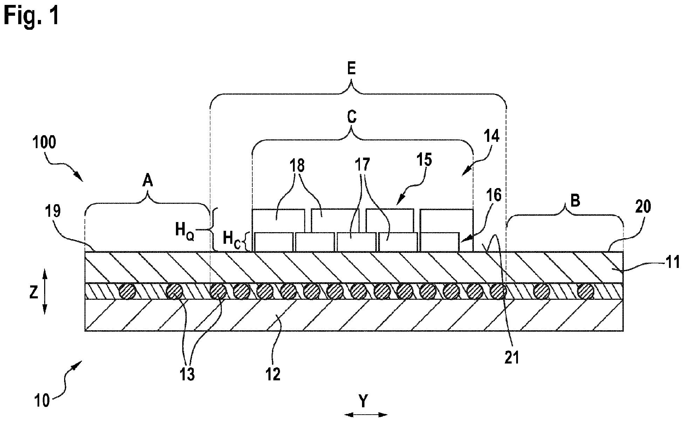

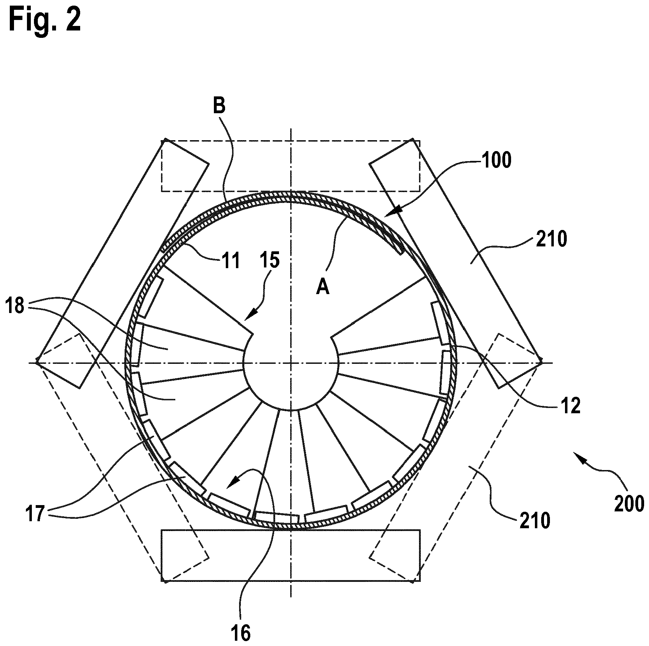

Fig. 1 zeigt eine schematische Schnittdarstellung durch einen Fördergurt 100 entlang einer Querrichtung Y des Fördergurtes 100. Der Fördergurt 100 weist einen Gurtkörper 10 auf, welcher eine tragseitige Deckplatte 11 und eine der tragseitigen Deckplatte gegenüberliegende laufseitige Deckplatte 12 aufweist. Auf der tragseitigen Deckplatte 11 liegt das zu transportierende Fördergut, hier nicht gezeigt, auf. An der laufseitigen Deckplatte 12 liegen Tragrollen 210 zur Förderung des Fördergurtes 100 in Förderrichtung Q an, wie dies beispielsweise in Fig. 2 gezeigt ist.

Zwischen der tragseitigen Deckplatte 11 und der laufseitigen Deckplatte 12 sind eine Vielzahl von Zugträgern 13 angeordnet, welche Zugkräfte des Fördergurtes 100 aufnehmen können. Bei der hier gezeigten Ausgestaltung nimmt die Anzahl der Zugträger 13 dabei von der Mitte (Zone E) des Gurtkörpers 10 hin zu den Gurtkanten (Randzonen A, B) des Fördergurtes 100 bzw. des Gurtkörpers 10 ab. Als Zugträger 13 können beispielsweise Stahlseile eingesetzt sein.

Auf der tragseitigen Deckplatte 11 ist eine Profilierung 14 ausgebildet, wobei die Profilierung 14 Querstreifen-Profilierungsbereiche 15 und Chevron-Profilierungsbereiche 16 aufweist. Die Querstreifen-Profilierungsbereiche 15 weisen eine Höhe H_{Q} auf, welche größer ist als die Höhe H_{C} der Chevron-Profilierungsbereiche 16. Durch die Schnittdarstellung in Fig. 1 ist ein Querstreifen-Profilierungsbereich 15 und ein davor angeordneter Chevron-Profilierungsbereich 16 zu erkennen. Der in Fig. 1 gezeigte Chevron-Profilierungsbereich 16 weist mehrere einzelne Stegelemente 17 auf, welche in Form von sogenannten Schrägnocken- oder Fischgrätenmusterung ausgebildet sein können. Auch der in Fig. 1 gezeigte Querstreifen-Profilierungsbereich 15 weist mehrere einzelne Stegelemente 18 auf. Die Chevron-Profilierungsbereiche 16 und die Querstreifen-Profilierungsbereiche 15 erstrecken sich über die Breite des Bereiches C der tragseitigen Deckplatte 11 des Gurtkörpers 10 innerhalb der Zone E. Die Chevron-Profilierungsbereiche 16 und die Querstreifen-Profilierungsbereiche 15 erstrecken sich in senkrechter Richtung Z von der Oberfläche 21 der tragseitigen Deckplatte 11 weg. Die Breite des Profilierungsbereiches C beträgt in der Regel die Hälfte bis zwei Drittel der gesamten Gurtbreite. Somit ist der Profilierungsbereich C deutlich kleiner als die Zone E.

In Fig. 2 ist der Fördergurt 100 in Form eines Rohrfördergurtes geformt, indem die Randzonen A, B des Gurtkörpers 10 überlappend angeordnet sind. Wie in Fig. 2 gezeigt ist, ist der Fördergurt 100 hier in einer Tragrollenstation 200 angeordnet, welche eine Vielzahl von Tragrollen 210 über den Umfang des Fördergurtes 100 verteilt angeordnet aufweist.

In Fig. 2 ist ferner zu erkennen, dass bei der Ausbildung des Fördergurtes 100 als Rohrfördergurt die Querstreifen-Profilierungsbereiche 15 mindestens die Hälfte, vorzugsweise zwei Drittel, der Querschnittsfläche des schlauchförmig geformten Fördergurtes 100 ausfüllen. Sowohl der in Fig. 2 zu erkennende Querstreifen-Profilierungsbereich 15 weist mehrere einzelne Stegelemente 18 auf, als auch der in Fig. 2 zu erkennende Chevron-Profilierungsbereich 16 weist mehrere einzelne Stegelemente 17 auf. Durch die schlauchförmige Formung des Fördergurtes 100 liegen die einzelnen, benachbart zueinander angeordneten Stegelemente 18 des Querstreifen-Profilierungsbereich 15 aneinander an bzw. überlappen sich, so dass der Querstreifen-Profilierungsbereich 15 eine geschlossene Trennwand über einen Großteil der Breite E der tragseitigen Deckplatte 11 ausbildet.

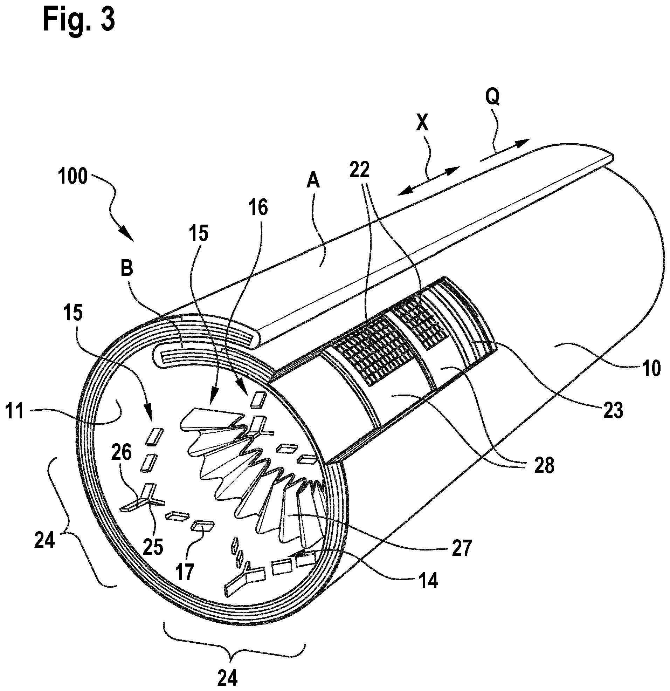

Fig. 3 zeigt eine perspektivische schematische Schnittdarstellung eines Fördergurtes 100. In dieser geschnittenen Darstellung ist zu erkennen, dass der Gurtkörper 10 zur Erhöhung seiner Quersteifigkeit mehrere durch dicke Gummischichten 28 getrennte, als Zugträger fungierende Gewebelagen 22 und eine Armierung 23, welche beispielsweise als Gewebearmierung oder Stahlarmierung ausgebildet sein kann, aufweist. Sowohl die Armierung 23 als auch die durch dicke Gummischichten 28 getrennte Gewebelagen 22 können in einer zusammengerollten Form des Fördergurtes 100, wie sie in Figur 3 gezeigt, die Quersteifigkeit des Fördergurtes 100 für einen langen Zeitraum gewährleisten, wodurch insbesondere ein Zusammenfallen des Fördergurtes 100 verhindert werden kann. Für die Gewebelagen 22 kann beispielsweise Polyester, Polyamid, Baumwolle oder Aramid verwendet werden. Als Armierung 23 können beispielsweise Gewebeseile oder Stahlseile eingesetzt sein, welche quer zur Längsrichtung X in dem Gurtkörper 10 angeordnet sind.

In der Darstellung in Fig. 3 ist ebenfalls eine Profilierung 14 auf der tragseitigen Deckplatte 11 des Gurtkörpers 10 gezeigt, wobei durch die perspektivische Darstellung zwei Chevron-Profilierungsbereiche 16 und ein Querstreifen-Profilierungsbereich 15 zu erkennen sind. Der in Fig. 3 gezeigte Querstreifen-Profilierungsbereich 15 weist ein Stegelement 27 auf, welches sich über einen Großteil der Breite E der tragseitigen Deckplatte 11 durchgehend erstreckt und eine Wellenkantenform aufweist.

Die Chevron-Profilierungsbereiche 16, welche in Längsrichtung X des Fördergurtes 100 vor und hinter dem Querstreifen-Profilierungsbereich 15 angeordnet sind, weisen jeweils mehrere diagonal zur Längsrichtung X der tragseitigen Deckplatte 11 angeordnete Stegelemente 17 in Form von Schrägnocken auf, welche in Gruppen 24 angeordnet sind, wobei jede Gruppe 24 von Stegelementen 17 eine V-Form mit einer aus zwei aneinander angrenzenden Stegelementen 17 ausgebildeten Spitze 25 aufweist, welche entgegen einer Förderrichtung Q des Fördergurtes 100 ausgerichtet ist. Die einzelnen Stegelemente 17 sind bis auf die die Spitze 25 ausbildenden zwei Stegelemente 17 beabstandet zueinander angeordnet. An der Spitze 25 ist ein zusätzliches Stegelement 26 angeordnet, welches sich in Längsrichtung X der tragseitigen Deckplatte 11 erstreckt, wobei sich dieses zusätzliche Stegelement 26 entgegen der Förderrichtung Q des Fördergurtes 100 von der Spitze 25 weg erstreckt. Die in Fig. 3 zu erkennenden Chevron-Profilierungsbereiche 16 weisen jeweils mehrere Gruppen 24 an diagonal zur Längsrichtung X der tragseitigen Deckplatte 11 angeordneten Stegelementen 17 auf.

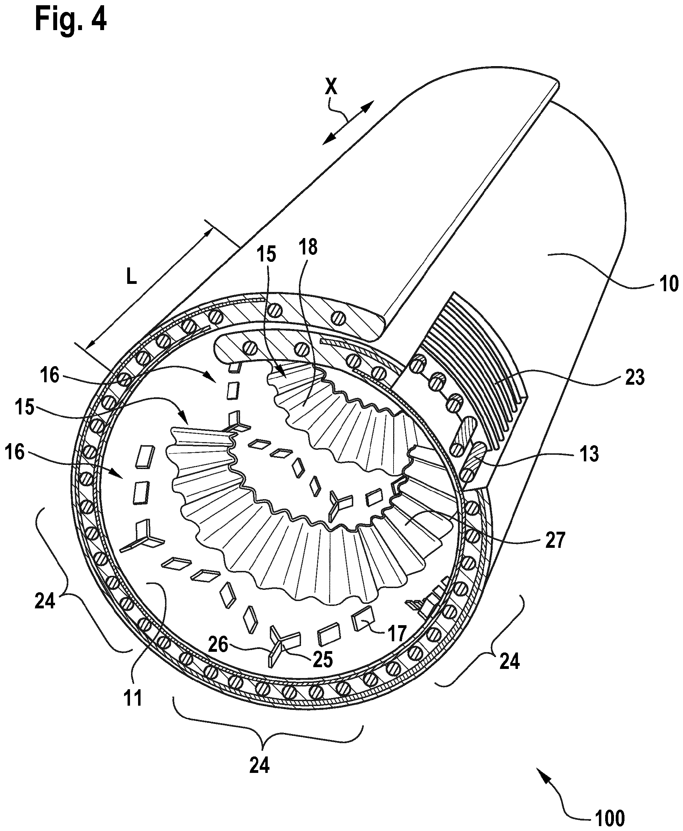

Fig. 4 zeigt eine Darstellung eines Fördergurtes 100, bei welcher zwei Querstreifen-Profilierungsbereiche 15 und zwei Chevron-Profilierungsbereiche 16 erkennbar sind, wobei diese alternierend angeordnet sind, indem in Längsrichtung X auf einen Chevron-Profilierungsbereich 16 ein Querstreifen-Profilierungsbereich 15 und auf den Querstreifen-Profilierungsbereich 15 wieder ein Chevron-Profilierungsbereich 16 und darauf wieder ein Querstreifen-Profilierungsbereich 15 folgt, wobei diese alternierende Anordnung von Chevron-Profilierungsbereichen 16 und Querstreifen-Profilierungsbereichen 15 sich vorzugsweise über die gesamte Länge des Fördergurtes 100 erstreckt. Der in Fig. 4 gezeigte Fördergurt 100 unterscheidet sich im Wesentlichen dadurch von dem in Fig. 3 gezeigten Fördergurt 100, dass anstelle der Gewebelagen 22 des in Fig. 3 gezeigten Fördergurtes 100 bei dem in Fig. 4 gezeigten Fördergurt 100 in Längsrichtung X verlaufende Zugträger 13 in Form von Stahlseilen in dem Gurtkörper 10 angeordnet sind.

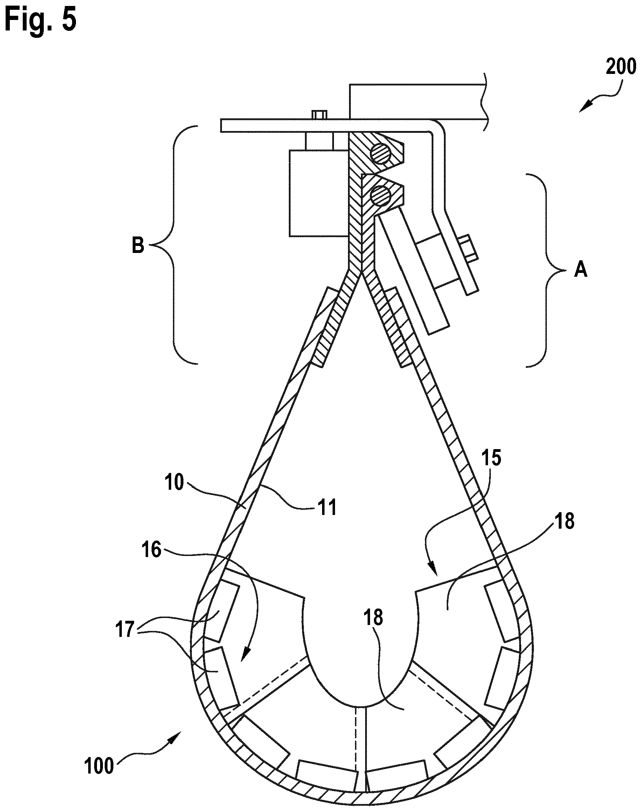

Fig. 5 zeigt einen Fördergurt 100, welcher als Taschenfördergurt ausgebildet ist. Der Fördergurt 100 weist an seinem Gurtkörper 10, insbesondere an den Randzonen A, B des Gurtkörpers 10, angeformte Profile auf, wobei in den Profilen Zugträger in Längsrichtung des Fördergurtes 100 eingeformt sind. Der Fördergurt 100 ist zwischen Tragrollen einer Tragrollenstation 200 gehalten und geführt. Der Gurtkörper 10 des Fördergurtes 100 ist in Form einer Tasche geformt, wobei auch hier auf der tragseitigen Deckplatte 11 des Gurtkörpers 10 sowohl Querstreifen-Profilierungsbereiche 15 als auch Chevron-Profilierungsbereiche 16 ausgebildet sind. Durch die Schnittdarstellung ist in Fig. 5 einer dieser mehreren Querstreifen-Profilierungsbereiche 15 und einer dieser mehreren Chevron-Profilierungsbereiche 16 zu erkennen, wobei der Querstreifen-Profilierungsbereich 15 aus mehreren, aneinander anliegenden bzw. sich überlappenden Stegelementen 18 und der Chevron-Profilierungsbereich 16 aus mehreren im Wesentlichen beabstandet zueinander angeordneten Stegelementen 17 ausgebildet ist.

### Bezugszeichenliste

### (Teil der Beschreibung)

- A: erste Randzone mit vergrößerter Zugträgerteilung
- B: zweite Randzone mit vergrößerter Zugträgerteilung
- E: Mittelzone mit normaler Zugträgerteilung
- C: Profilierungsbereich innerhalb der Zone E
- H_{Q}: Höhe des Querstreifen-Profilierungsbereiches
- H_{C}: Höhe des Chevron-Profilierungsbereiches
- L: Abstand der Querstreifen-Profilierungsbereiche zueinander
- Q: Förderrichtung des Fördergurtes
- Y: Querrichtung
- X: Längsrichtung
- Z: senkrechte Richtung

- 100: Fördergurt
- 10: Gurtkörper
- 11: tragseitige Deckplatte
- 12: laufseitige Deckplatte
- 13: Zugträger
- 14: Profilierung
- 15: Querstreifen-Profilierungsbereich
- 16: Chevron-Profilierungsbereich
- 17: Stegelement
- 18: Stegelement
- 19: erste Längsseitenkante
- 20: zweite Längsseitenkante
- 21: Oberfläche
- 22: Gewebelagen
- 23: Armierung
- 24: Gruppe
- 25: Spitze
- 26: Stegelement
- 27: Stegelement
- 28: Gummischicht

- 200: Tragrollenstation
- 210: Tragrollen

## Patentansprüche

1. Fördergurt (100), insbesondere Rohrfördergurt oder Taschenfördergurt, mit einem Gurtkörper (10), welcher eine tragseitige Deckplatte (11) zur Aufnahme von zu transportierenden Fördergut aufweist,
wobei auf der tragseitigen Deckplatte (11) eine im Wesentlichen in senkrechter Richtung (Z) zur Oberfläche (21) der tragseitigen Deckplatte (11) ausgebildete Profilierung ausgebildet ist, wobei die Profilierung (14) entlang einer Längsrichtung (X) der tragseitigen Deckplatte (11) mehrere Querstreifen-Profilierungsbereiche (15) aufweist,
**dadurch gekennzeichnet, dass**
die Profilierung (14) zusätzlich zu den Querstreifen-Profilierungsbereichen (15) entlang der Längsrichtung (X) der tragseitigen Deckplatte (11) mehrere Chevron-Profilierungsbereiche (16) aufweist,
wobei die Querstreifen-Profilierungsbereiche (15) und die Chevron-Profilierungsbereiche (16) in Längsrichtung (X) der tragseitigen Deckplatte (11) alternierend angeordnet sind.

2. Fördergurt (100) nach Anspruch 1, **dadurch gekennzeichnet, dass** die Querstreifen-Profilierungsbereiche (15) in einem Abstand (L) von 1,5 m ≤ L ≤ 2,5 m zueinander angeordnet sind.

3. Fördergurt (100) nach einem der Ansprüche 1 oder 2, **dadurch gekennzeichnet, dass** sich die Querstreifen-Profilierungsbereiche (15) und/oder die Chevron-Profilierungsbereiche (16) jeweils innerhalb der Breite (E) der tragseitigen Deckplatte (11) erstrecken.

4. Fördergurt (100) nach einem der Ansprüche 1 bis 3, **dadurch gekennzeichnet, dass** mindestens eines der mehreren Querstreifen-Profilierungsbereiche (15) ein Stegelement (27) in einer Wellenkantenform aufweist.

5. Fördergurt (100) nach einem der Ansprüche 1 bis 4, **dadurch gekennzeichnet, dass** mindestens eines der mehreren Querstreifen-Profilierungsbereiche (15) jeweils mehrere in Querrichtung (Y) der tragseitigen Deckplatte (11) in einer Reihe hintereinander angeordnete Stegelemente (18) aufweist, welche derart beabstandet zueinander angeordnet sind, dass bei einer rohrförmigen oder taschenförmigen Verformung des Fördergurtes (100) die benachbart zueinander angeordneten Stegelemente (18) zumindest bereichsweise aneinander anliegen oder sich überlappen.

6. Fördergurt (100) nach einem der Ansprüche 1 bis 5, **dadurch gekennzeichnet, dass** die Chevron-Profilierungsbereiche (16) jeweils mehrere diagonal zur Längsrichtung (X) der tragseitigen Deckplatte (11) angeordnete Stegelemente (17) aufweisen, welche in Gruppen (24) angeordnet sind, wobei jede Gruppe (24) von Stegelementen (17) eine V-Form mit einer aus zwei aneinander angrenzenden Stegelementen ausgebildeten Spitze (25) ausbildet, welche entgegen der Förderrichtung (Q) des Fördergurtes (100) ausgerichtet ist.

7. Fördergurt (100) nach Anspruch 6, **dadurch gekennzeichnet, dass** die Chevron-Profilierungsbereiche (16) jeweils zwei oder mehr Gruppen an V-förmig angeordneten Stegelementen (17) aufweisen.

8. Fördergurt (100) nach Anspruch 6 oder 7, **dadurch gekennzeichnet, dass** an der Spitze (25) ein sich in Längsrichtung (X) der tragseiteigen Deckplatte (11) erstreckendes Stegelement (26) angeordnet ist, welches sich entgegen der Förderrichtung (Q) des Fördergurtes (100) von der Spitze (25) wegerstreckt.

9. Fördergurt (100) nach einem der Ansprüche 1 bis 8, **dadurch gekennzeichnet, dass** die Querstreifen-Profilierungsbereiche (15) eine sich in senkrechter Richtung (Z) zur Oberfläche (21) der tragseitigen Deckplatte (11) erstreckende Höhe (H_{Q}) aufweisen, welche größer ist als eine sich in senkrechter Richtung (Z) zur Oberfläche (21) der tragseitigen Deckplatte (11) erstreckende Höhe (Hc) der Chevron-Profilierungsbereiche (16).

10. Fördergurt (100) nach Anspruch 9, **dadurch gekennzeichnet, dass** ein Verhältnis der Höhe (H_{Q}) der Querstreifen-Profilierungsbereiche (15) zu der Höhe (Hc) der Chevron-Profilierungsbereiche (16) von 3 ≤ H_{Q}/H_{C} ≤ 10 ausgebildet ist.

11. Fördergurt (100) nach einem der Ansprüche 1 bis 10, **dadurch gekennzeichnet, dass** die Chevron-Profilierungsbereiche (16) einstückig mit der tragseitigen Deckplatte (11) ausgebildet sind.

12. Fördergurt (100) nach einem der Ansprüche 1 bis 11, **dadurch gekennzeichnet, dass** die Querstreifen-Profilierungsbereiche (15) an der tragseitigen Deckplatte (11) durch Aufvulkanisierung befestigt sind.

## Claims

1. Conveyor belt (100), in particular tubular conveyor belt or pouch conveyor belt, with a belt body (10) that has a carrying-side cover sheet (11) for receiving material to be transported,
a profiling that is formed substantially in a perpendicular direction (Z) in relation to the surface (21) of the carrying-side cover sheet (11) being formed on the carrying-side cover sheet (11), the profiling (14) having a number of transverse-strip profiling regions (15) along a longitudinal direction (X) of the carrying-side cover sheet (11),
**characterized in that**
the profiling (14) has in addition to the transverse-strip profiling regions (15) a number of chevron profiling regions (16) along the longitudinal direction (X) of the carrying-side cover sheet (11), the transverse-strip profiling regions (15) and the chevron profiling regions (16) being arranged in an alternating manner in the longitudinal direction (X) of the carrying-side cover sheet (11).

2. Conveyor belt (100) according to Claim 1, **characterized in that** the transverse-strip profiling regions (15) are arranged at a spacing (L) of 1.5 m ≤ L ≤ 2.5 m in relation to one another.

3. Conveyor belt (100) according to one of Claims 1 and 2, **characterized in that** the transverse-strip profiling regions (15) and/or the chevron profiling regions (16) extend in each case within the width (E) of the carrying-side cover sheet (11).

4. Conveyor belt (100) according to one of Claims 1 to 3, **characterized in that** at least one of the number of transverse-strip profiling regions (15) has a web element (27) in a wave edge form.

5. Conveyor belt (100) according to one of Claims 1 to 4, **characterized in that** at least one of the number of transverse-strip profiling regions (15) has in each case a number of web elements (18) arranged one behind the other in a row in the transverse direction (Y) of the carrying-side cover sheet (11) that are spaced apart from one another in such a way that, when the conveyor belt (100) is deformed in the form of a tube or in the form of a pouch, the web elements (18) arranged alongside one another lie against one another or overlap, at least in certain regions.

6. Conveyor belt (100) according to one of Claims 1 to 5, **characterized in that** the chevron profiling regions (16) have in each case a number of web elements (17) arranged diagonally in relation to the longitudinal direction (X) of the carrying-side cover sheet (11) and arranged in groups (24), each group (24) of web elements (17) forming a V shape with a tip (25) formed by two mutually adjacent web elements, the tip being aligned counter to the conveying direction (Q) of the conveyor belt (100).

7. Conveyor belt (100) according to Claim 6, **characterized in that** the chevron profiling regions (16) have in each case two or more groups of web elements (17) arranged in a V-shaped manner.

8. Conveyor belt (100) according to Claim 6 or 7, **characterized in that** there is arranged at the tip (25) a web element (26) extending in the longitudinal direction (X) of the carrying-side cover sheet (11) that extends away from the tip (25) counter to the conveying direction (Q) of the conveyor belt (100).

9. Conveyor belt (100) according to one of Claims 1 to 8, **characterized in that** the transverse-strip profiling regions (15) have a height (H_{Q}), extending in a perpendicular direction (Z) in relation to the surface (21) of the carrying-side cover sheet (11), that is greater than a height (H_{C}), extending in a perpendicular direction (Z) in relation to the surface (21) of the carrying-side cover sheet (11), of the chevron profiling regions (16).

10. Conveyor belt (100) according to Claim 9, **characterized in that** a ratio of the height (H_{Q}) of the transverse-strip profiling regions (15) to the height (H_{C}) of the chevron profiling regions (16) of 3 ≤ H_{Q}/H_{C} ≤ 10 is formed.

11. Conveyor belt (100) according to one of Claims 1 to 10, **characterized in that** the chevron profiling regions (16) are formed in one piece with the carrying-side cover sheet (11).

12. Conveyor belt (100) according to one of Claims 1 to 11, **characterized in that** the transverse-strip profiling regions (15) are fastened to the carrying-side cover sheet (11) by being vulcanized on.

## Revendications

1. Bande transporteuse (100), en particulier bande transporteuse tubulaire ou bande transporteuse en forme de poche, comportant
un corps de bande (10), lequel comprend une plaque de recouvrement (11) côté porteur destinée à recevoir le produit convoyé à transporter,
un profilage formé sensiblement dans la direction perpendiculaire (Z) par rapport à la surface (21) de la plaque de recouvrement (11) côté porteur étant formé sur la plaque de recouvrement (11) côté porteur, le profilage (14) comprenant plusieurs zones de profilage à bandes transversales (15) le long d'une direction longitudinale (X) de la plaque de recouvrement (11) côté porteur, **caractérisée en ce que**
le profilage (14) comprend, en plus des zones de profilage à bandes transversales (15), plusieurs zones de profilage en chevrons (16) le long de la direction longitudinale (X) de la plaque de recouvrement (11) côté porteur,
les zones de profilage à bandes transversales (15) et les zones de profilage en chevrons (16) étant disposées en alternance dans la direction longitudinale (X) de la plaque de recouvrement (11) côté porteur.

2. Bande transporteuse (100) selon la revendication 1, **caractérisée en ce que** les zones de profilage à bandes transversales (15) sont disposées à une distance (L) de 1,5 m ≤ L ≤ 2,5 m les unes par rapport aux autres.

3. Bande transporteuse (100) selon l'une des revendications 1 et 2, **caractérisée en ce que** les zones de profilage à bandes transversales (15) et/ou les zones de profilage en chevrons (16) s'étendent respectivement à l'intérieur de la largeur (E) de la plaque de recouvrement (11) côté porteur.

4. Bande transporteuse (100) selon l'une des revendications 1 à 3, **caractérisée en ce qu'**au moins l'une des plusieurs zones de profilage à bandes transversales (15) comprend un élément nervuré (27) en forme de bord ondulé.

5. Bande transporteuse (100) selon l'une des revendications 1 à 4, **caractérisée en ce qu'**au moins l'une des plusieurs zones de profilage à bandes transversales (15) comprend respectivement plusieurs éléments nervurés (18) disposés en rangée les uns derrière les autres dans la direction transversale (Y) de la plaque de recouvrement (11) côté porteur, lesquels éléments nervurés sont disposés de manière espacée les uns des autres de telle sorte qu'en cas de déformation tubulaire ou en forme de poche de la bande transporteuse (100), les éléments nervurés (18) disposés de manière adjacente les uns aux autres s'appliquent les uns contre les autres ou se chevauchent au moins dans certaines zones.

6. Bande transporteuse (100) selon l'une des revendications 1 à 5, **caractérisée en ce que** les zones de profilage en chevrons (16) comprennent respectivement plusieurs éléments nervurés (17) disposés en diagonale par rapport à la direction longitudinale (X) de la plaque de recouvrement (11) côté porteur, lesquels éléments nervurés sont disposés en groupes (24), chaque groupe (24) d'éléments nervurés (17) formant une forme en V dotée d'une pointe (25) formée à partir de deux éléments nervurés adjacents l'un à l'autre, laquelle pointe est orientée en sens inverse de la direction de convoyage (Q) de la bande transporteuse (100).

7. Bande transporteuse (100) selon la revendication 6, **caractérisée en ce que** les zones de profilage en chevrons (16) comprennent respectivement deux ou plus de deux groupes d'éléments nervurés (17) disposés en forme de V.

8. Bande transporteuse (100) selon la revendication 6 ou 7, **caractérisée en ce qu'**un élément nervuré (26) s'étendant dans la direction longitudinale (X) de la plaque de recouvrement (11) côté porteur est disposé au niveau de la pointe (25), lequel élément nervuré s'éloigne de la pointe (25) en sens inverse de la direction de convoyage (Q) de la bande transporteuse (100) .

9. Bande transporteuse (100) selon l'une des revendications 1 à 8, **caractérisée en ce que** les zones de profilage à bandes transversales (15) présentent une hauteur (H_{Q}) s'étendant dans la direction perpendiculaire (Z) par rapport à la surface (21) de la plaque de recouvrement (11) côté porteur, laquelle hauteur est supérieure à une hauteur (H_{C}) des zones de profilage en chevrons (16) s'étendant dans la direction perpendiculaire (Z) par rapport à la surface (21) de la plaque de recouvrement (11) côté porteur.

10. Bande transporteuse (100) selon la revendication 9, **caractérisée en ce qu'**un rapport de la hauteur (H_{Q}) des zones de profilage à bandes transversales (15) par rapport à la hauteur (H_{C}) des zones de profilage en chevrons (16) de 3 ≤ H_{Q}/H_{C} ≤ 10 est formé.

11. Bande transporteuse (100) selon l'une des revendications 1 à 10, **caractérisée en ce que** les zones de profilage en chevrons (16) sont formées d'une seule pièce avec la plaque de recouvrement (11) côté porteur.

12. Bande transporteuse (100) selon l'une des revendications 1 à 11, **caractérisée en ce que** les zones de profilage à bandes transversales (15) sont fixées à la plaque de recouvrement (11) côté porteur par vulcanisation.
